# FASCICULE DE BREVET EUROPEEN

(11) **EP 0 669 689 B1**
(45) Date de publication et mention de la délivrance du brevet: **11.08.1999**
(21) Numéro de dépôt: 95400385.1
(22) Date de dépôt: 23.02.1995
(51) Int. Cl.: H02G 3/18, H01H 23/04

(54) **Ensemble formé par un boîtier et au moins une cassete contenant au moins un composant électrique**
Anordnung aus einer Gehäuse und mindestens einer Kassette mit mindestens einem elektrischen Bauelement dafür
Assembly formed by a housing box and at leat one cassette containing at least one electrical component

(30) Priorité: 25.02.1994 FR 9402170
(43) Date de publication de la demande: 30.08.1995
(73) Titulaire: LEGRAND, F-87045 Limoges Cédex (FR); LEGRAND SNC, F-87045 Limoges (FR)
(72) Inventeur: Daccord, Marcel, F-87920 Condat (FR); Pallier, Michel, F-87000 Limoges (FR); Pourieux, Nicolas, F-87000 Limoges (FR)
(74) Mandataire: CABINET BONNET-THIRION

(56) Documents cités:
- FR-A- 1 369 290
- US-A- 5 213 204

## Description

La présente invention concerne d'une manière générale les appareils électriques qui, pour des questions par exemple d'étanchéité, sont à disposer dans un boîtier.

Il peut s'agir par exemple d'interrupteurs ou de va-et-vient, de prises de courant ou de poussoirs.

La présente invention vise plus particulièrement le cas où, pour le logement, dans le boîtier, des composants électriques correspondants, en l'espèce le mécanisme lorsqu'il s'agit d'un interrupteur ou d'un va-et-vient, ces composants sont disposés dans une cassette à rapporter dans ce boîtier.

Globalement, le boîtier comporte, à ce jour, d'une part, un corps de boîtier, qui est adapté à recevoir la cassette, et qui, pour une fixation relative de celle-ci, comporte des moyens d'assujettissement propres à coopérer avec des moyens d'assujettissement complémentaires prévus à cet effet sur cette cassette, et, d'autre part, un couvercle, qui est adapté à recouvrir le corps de boîtier, et auquel sont associés des moyens de fermeture propres à le solidariser de manière débrayable à ce dernier.

Dans le brevet américain No 5 213 204, les moyens d'assujettissement intervenant entre le corps de boîtier et la cassette sont des moyens d'encliquetage, qui sont assez complexes à réaliser et à mettre en oeuvre.

C'est pourquoi, le plus souvent à ce jour, les moyens d'assujettissement équipant le corps du boîtier se réduisent à deux nervures, qui s'étendent en saillie en direction l'une de l'autre sur deux parois opposées de ce corps de boîtier, et avec lesquelles la cassette vient en prise par deux fentes, jusqu'à venir reposer librement sur deux épaulements parallèles au fond du corps de boîtier.

Bien plus qu'une réelle fixation de la cassette, ces moyens d'assujettissement assurent plutôt une simple localisation de celle-ci dans le corps de boîtier, en contrôlant son centrage dans ce dernier.

Cette disposition donne satisfaction.

Elle présente cependant des inconvénients, qui sont les suivants.

Tout d'abord, la cassette ne présente en réalité aucune tenue dans le corps de boîtier, notamment perpendiculairement au fond de celui-ci.

Il en résulte que, après son câblage, elle est quasi inévitablement l'objet d'une sollicitation de soulèvement de la part des conducteurs électriques assurant sa desserte, la longueur en surplus de ces conducteurs électriques étant usuellement lovée sous contrainte entre elle et le fond du corps de boîtier.

La mise en place du couvercle sur ce corps de boîtier peut s'en trouver plus ou moins contrariée.

En outre, pour la livraison de l'ensemble, il est nécessaire de faire intervenir les moyens de fermeture associés au couvercle, pour que celui-ci soit dûment solidarisé au corps de boîtier et qu'ainsi la cassette ne puisse échapper à ce dernier.

Pour l'installateur, qui doit avoir accès à la cassette pour en assurer le câblage, il est donc nécessaire d'agir d'abord sur ces moyens de fermeture, ce qui peut exiger l'aide d'un outil.

La présente invention a d'une manière générale pour objet une disposition permettant d'éviter ces inconvénients et conduisant en outre à d'autres avantages.

De manière plus précise, elle a tout d'abord pour objet un ensemble formé par un boîtier et au moins une cassette contenant au moins un composant électrique, le boîtier comportant, d'une part, un corps de boîtier, qui est adapté à recevoir la cassette, et qui, pour une fixation relative de celle-ci, comporte des moyens d'assujettissement propres à coopérer avec des premiers moyens d'assujettissement complémentaires prévus à cet effet sur cette cassette, et, d'autre part, un couvercle, qui est adapté à recouvrir le corps de boîtier, et auquel sont associés des moyens de fermeture propres à le solidariser de manière débrayable à celui-ci, cet ensemble étant d'une manière générale caractérisé en ce que le couvercle comporte également, pour une fixation relative de la cassette, des moyens d'assujettissement propres à coopérer avec des seconds moyens d'assujettissement complémentaires prévus à cet effet sur cette cassette.

Ainsi, liée tant au corps de boîtier qu'au couvercle, la cassette bénéficie avantageusement d'une excellente tenue dans l'ensemble.

En outre, elle assure avantageusement par elle-même une liaison suffisante du couvercle au corps de boîtier pour que l'ensemble puisse être ainsi livré de manière monobloc, sans intervention des moyens de fermeture associés au couvercle qui, au contraire, sont laissés inactifs.

Il suffit, dès lors, à l'installateur, pour avoir accès à la cassette, de retirer le couvercle, sans action sur ces moyens de fermeture, et cette simple dépose du couvercle ne nécessite avantageusement aucun outil.

Préférentiellement, la force de retenue due, pour la cassette, aux moyens d'assujettissement équipant le corps de boîtier est supérieure à celle due aux moyens d'assujettissement équipant le couvercle.

Ainsi, il est assuré que, à la dépose du couvercle, la cassette reste avantageusement dans le corps de boîtier, dans la position qui doit être la sienne en service.

Mais, suivant un développement de l'invention, il peut si désiré être avantageusement tiré parti des moyens d'assujettissement que comporte pour elle le couvercle, pour assurer, au montage, sa mise en place dans ce couvercle avant de rapporter l'ensemble sur le corps de boîtier.

Cette mise en place peut s'en trouver facilitée, notamment lorsqu'elle implique une certaine intervention sur la cassette, tel que cela peut être le cas lorsque celle-ci doit être jumelée à une cassette de même type pour la formation d'une cassette double et/ou lorsque, à la demande, elle doit être équipée d'un ou plusieurs composants supplémentaires tels que voyants ou autres.

Enfin, du fait que la force de retenue due, pour la cassette, aux moyens d'assujettissement équipant le corps de boîtier est nécessairement non négligeable, puisqu'elle doit être supérieure à celle due aux moyens d'assujettissement équipant le couvercle, la cassette est avantageusement à même de résister à la sollicitation de soulèvement dont elle est l'objet de la part des conducteurs électriques sous-jacents.

La remise en place du couvercle après le câblage de cette cassette s'en trouve avantageusement facilitée.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un ensemble suivant l'invention ;
la figure 2 en est, à échelle supérieure, et avec un arrachement local, une vue en perspective éclatée, le boîtier de cet ensemble et la cassette qu'il contient étant vus de dessus ;
la figure 3 est, à échelle supérieure, une vue en plan de la seule cassette, suivant la flèche III de la figure 2 ;
les figures 4 et 5 sont, à échelle encore supérieure, des vues partielles en coupe transversale de cette cassette, suivant, chacune respectivement, les lignes IV-IV et V-V de la figure 3 ;
la figure 6 est, à l'échelle de la figure 2, une vue en perspective éclatée de la cassette et du seul couvercle du boîtier, vus de dessous, avant le montage de la cassette sur ce couvercle ;
la figure 7 est une vue en perspective analogue à celle de la figure 6, après ce montage ;
la figure 8 est, à échelle différente, une vue partielle en coupe de l'ensemble, suivant la ligne brisée VIII-VIII de la figure 1 ;
les figures 9, 10 et 11 sont, à échelle supérieure, des vues partielles en coupe reprenant chacune respectivement les détails de la figure 8 repérés par des encarts IX, X et XI sur cette figure 8.

Tel qu'illustré sur ces figures, l'ensemble suivant l'invention est formé par un boîtier 10 et au moins une cassette 11, qui, logée dans le boîtier 10, contient elle-même au moins un composant électrique, non visible en détail sur les figures.

Dans la forme de réalisation représentée en traits continus sur les figures, seule une cassette 11 est prévue.

Par exemple, le composant électrique contenu dans cette cassette 11 est le mécanisme d'un interrupteur, ou d'un va-et-vient, qui, par des bornes de connexion, par exemple à vis de serrage 12, peut être relié aux conducteurs électriques, non représentés, nécessaires à sa desserte, et qui, par l'intermédiaire d'un entraîneur 13, monté pivotant, et accessible à la faveur d'un puits 14 de la cassette 11, est sous le contrôle d'une touche de manoeuvre 15 à la disposition de l'usager en façade du boîtier 10.

Ce mécanisme ne relevant pas de la présente invention, il ne sera pas décrit ici.

De même, la cassette 11 ne sera pas décrite dans tous ses détails ici.

Seuls en seront décrits les éléments nécessaires à la compréhension de l'invention.

Il suffira d'indiquer que, de manière connue en soi, cette cassette 11 comporte, d'une part, un corps 16, qui, fermé par un couvercle 18, forme à lui seul le logement du composant électrique concerné, et, d'autre part, un bras 20, qui, solidaire du corps 16, s'étend en porte à faux à compter de celui-ci.

Dans la forme de réalisation représentée, le corps 16 a, globalement, en plan, un contour quadrangulaire, et le bras 20 s'étend à compter d'un de ses angles, en continuité avec l'une de ses parois latérales, et sensiblement à niveau avec son fond.

De manière également connue en soi, le boîtier 10 comporte, globalement, d'une part, un corps de boîtier 22, qui est adapté à recevoir la cassette 11, et qui, pour une fixation relative de celle-ci, comporte, suivant des modalités décrites plus en détail ultérieurement, des moyens d'assujettissement 23A propres à coopérer avec des premiers moyens d'assujettissement complémentaires 23B prévus à cet effet sur cette cassette 11, et, d'autre part, un couvercle 24, qui est adapté à recouvrir le corps de boîtier 22, et auquel sont associés, suivant également des modalités décrites plus en détail ultérieurement, des moyens de fermeture 25 propres à le solidariser de manière débrayable à ce corps de boîtier 22.

Dans la forme de réalisation représentée, le corps de boîtier 22 a, en plan, un contour quadrangulaire, et, par exemple, carré.

Il comporte un fond 26 et quatre parois latérales 27.

Deux de ces dernières sont chacune ajourées par une échancrure 28 propre à la mise en place d'un embout 29 permettant leur traversée à étanchéité par le câble électrique, non représenté, comportant les conducteurs nécessaires à la desserte du composant électrique que contient la cassette 11.

Dans la forme de réalisation représentée, les moyens d'assujettissement 23A équipant ce corps de boîtier 22 comportent au moins une colonnette 30, qui s'étend sensiblement perpendiculairement au fond 26, et dont l'extrémité, au moins, est libre.

En pratique, les moyens d'assujettissement 23A comportent, à distance l'une de l'autre, deux colonnettes 30.

Chacune de ces colonnettes 30 s'étend au voisinage d'une des parois latérales 27 du corps de boîtier 22, en étant raccordée à cette paroi latérale 27 par une nervure 31 formant à sa base, et parallèlement au fond 26, un épaulement 32.

En pratique, dans la forme de réalisation représentée, les deux colonnettes 30 s'étendent chacune respectivement au voisinage de deux parois latérales 27 opposées du corps de boîtier 22, et elles sont décalées l'une par rapport à l'autre de part et d'autre du plan médian de ce corps de boîtier 22 qui, perpendiculaire au fond 26, est également perpendiculaire à ces deux parois latérales 27 opposées.

En outre, dans cette forme de réalisation, elles ont chacune, en section transversale, un contour circulaire.

Corollairement, les premiers moyens d'assujettissement 23B prévus de manière complémentaire sur la cassette 11 comportent au moins une oreille 34 propre à l'engagement de cette cassette 11 sur une colonnette 30.

Dans la forme de réalisation représentée, ces premiers moyens d'assujettissement 23B comportent deux oreilles 34, à raison d'une par colonnette 30.

L'une de ces oreilles 34 s'étend dans celui des angles du corps 16 de la cassette 11 qui est opposé à celui à compter duquel s'étend le bras 20, et l'autre s'étend à l'extrémité de ce bras 20.

La première qui est ouverte localement par une fente 35 a globalement un contour circulaire, et la deuxième a globalement un contour en forme d'étrier.

Dans la forme de réalisation représentée, le couvercle 24, qui, dans sa zone centrale, est ajouré par une ouverture 36 pour que la touche de manoeuvre 15 ait accès au puits 14 de la cassette 11, comporte, à sa périphérie, un rebord 37 formant un logement 38 dans lequel cette touche de manoeuvre 15 est au moins en partie encastrée.

Les moyens de fermeture 25 qui lui sont associés comportent au moins un verrou 39, qui, monté pivotant à sa surface supérieure, au fond du logement 38, est destiné à coopérer avec une vis 40 solidaire du corps de boîtier 22, en s'engageant sous la tête 41 de cette vis 40.

Un tel verrou 39 est bien connu par lui-même, et il ne sera donc pas décrit en détail ici.

En pratique, deux verrous 39 sont prévus.

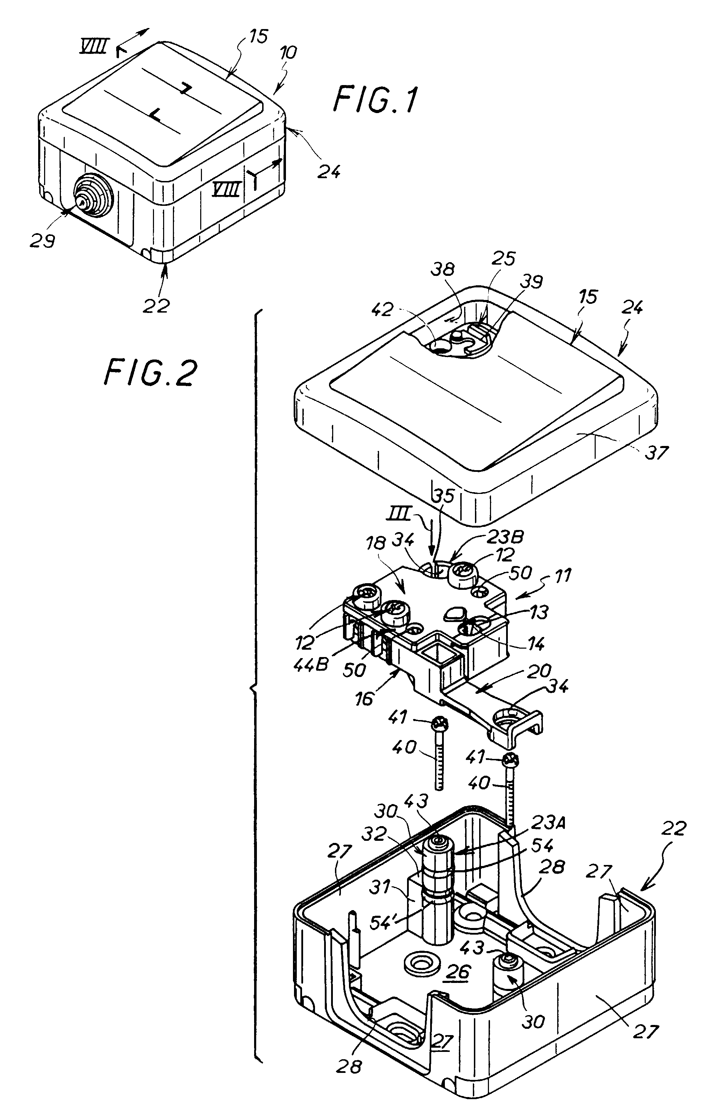

Seul l'un d'eux est visible à la figure 2, à la faveur de l'arrachement affectant localement la touche de manoeuvre 15.

En correspondance, le corps de boîtier 22 porte deux vis 40.

Pour le passage de ces vis 40, le couvercle 24 présente des ouvertures 42.

Dans la forme de réalisation représentée, et suivant l'invention, les vis 40 sont chacune respectivement en prise à vissage avec les colonnettes 30 équipant le corps de boîtier 22, celles-ci présentant chacune à cet effet un alésage axial 43.

Il est ainsi tiré un parti supplémentaire de ces colonnettes 30.

Suivant l'invention, le couvercle 24 comporte également, pour une fixation relative de la cassette 11, des moyens d'assujettissement 44A propres à coopérer avec des seconds moyens d'assujettissement complémentaires 44B prévus à ct effet sur cette cassette 11.

Dans la forme de réalisation représentée, les moyens d'assujettissement 44A équipant ainsi le couvercle 24 comportent au moins un ergot 45, qui, en saillie sur sa surface inférieure, s'étend sensiblement perpendiculairement à cette dernière, et, donc, sensiblement perpendiculairement au fond 26 du corps de boîtier 22.

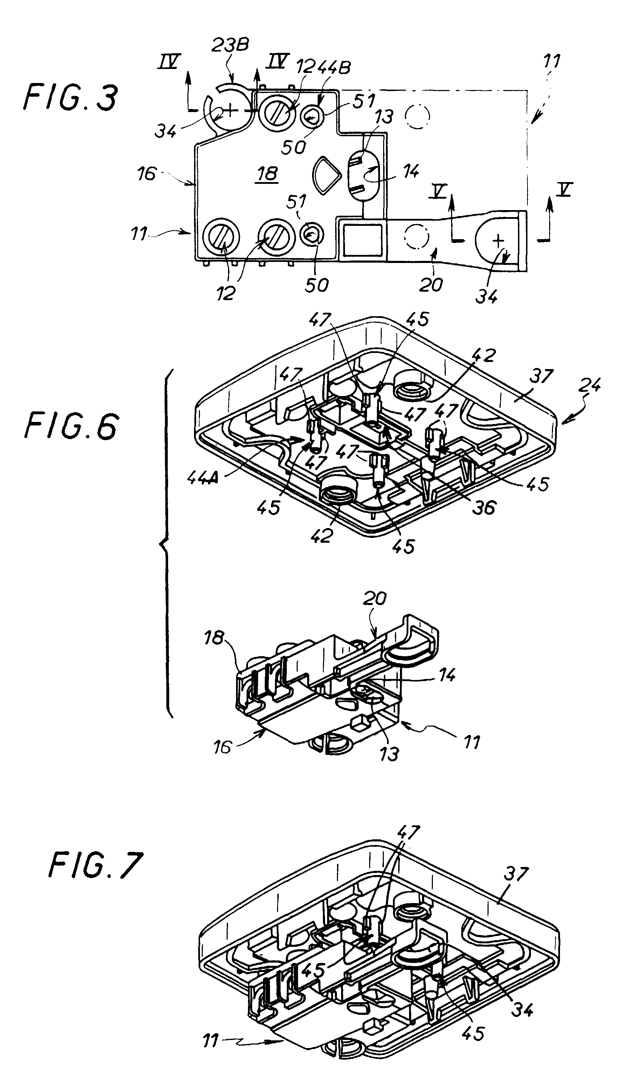

En pratique, dans la forme de réalisation représentée, ces moyens d'assujettissement 44A comportent quatre ergots 45, à raison de deux pour une cassette 11 et de deux autres pour une autre cassette 11 lorsque, pour la constitution d'une cassette double, et suivant des dispositions ne relevant pas de la présente invention, deux cassettes 11 identiques sont jumelées tête-bêche, tel que schématisé en traits interrompus sur la figure 3.

Ces ergots 45, qui sont répartis au sommet d'un rectangle, autour de l'ouverture 36 centrale du couvercle 24, s'étendent en pleine surface pour ce couvercle 24, à distance de sa périphérie.

Dans la forme de réalisation représentée, ils ont chacun, en section transversale, un contour circulaire, et, à leur extrémité libre, leur arête extérieure est abattue par un chanfrein 46.

Dans la forme de réalisation représentée, les ergots 45 sont en outre au moins localement renforcés par une nervure 47 à leur base.

En pratique, plusieurs nervures 47 sont prévues en étoile à la base de chacun de ces ergots 45.

Conjointement, dans la forme de réalisation représentée, les ergots 45 sont chacun allégés intérieurement par un alésage axial 48.

Les seconds moyens d'assujettissement 44B équipant corollairement de manière complémentaire la cassette 11 comportent conjointement au moins un perçage 50 propre à l'engagement de cette cassette 11 sur un ergot 45.

En pratique, la cassette 11 comporte, ainsi, à distance l'un de l'autre, deux, et seulement deux, perçages 50, une même cassette 11 ne mobilisant que deux ergots 45 du couvercle 24, comme déjà indiqué ci-dessus.

Les perçages 50 sont alignés perpendiculairement au bras 20 de la cassette 11, et, en pratique, ils n'affectent que le seul couvercle 18 de celle-ci.

Dans la forme de réalisation représentée, leur débouché à la surface supérieure du couvercle 18 est évasé par un chanfrein 51, pour faciliter l'engagement de la cassette 11 sur les ergots 45, en coopération avec le chanfrein 51 de ceux-ci, et leur section transversale a un contour polygonal dans lequel s'inscrit celui, circulaire, de ces ergots 45.

En pratique, dans cette forme de réalisation, chacun de ces perçages 50 se prolonge par une cheminée 52 à la surface inférieure du couvercle 18.

Préférentiellement, il est fait en sorte, par construction, que la force de retenue due, pour la cassette 11, aux moyens d'assujettissement 23A équipant le corps de boîtier 22, soit supérieure à celle due aux moyens d'assujettissement 44A équipant le couvercle 24.

Dans la forme de réalisation représentée, la force de retenue due, pour la cassette 11, aux moyens d'assujettissement 23A équipant le corps de boîtier 22 est, en pratique, une force d'encliquetage, impliquant une ouverture, par flexion, des oreilles 34 de la cassette 11.

A cet effet, chacune des colonnettes 30 du corps de boîtier 22 comporte, au moins localement, en saillie, à distance de l'épaulement 32 présent d'un côté à sa base, un bossage 54, et, au droit de cet épaulement 32, de l'autre côté de celui-ci, un bossage 54'.

Dans la forme de réalisation représentée, ce bossage 54 s'étend annulairement de manière continue tout autour de chaque colonnette 30, à la manière d'un bourrelet.

Le bossage 54' s'étend, lui, annulairement en continu de l'une à l'autre des faces de la nervure 31 associée.

Corollairement, chacune des oreilles 34 que comporte la cassette 11 présente elle-même au moins localement en saillie sur sa surface intérieure un bossage 55 ou 55'.

Pour l'oreille 34 prévue dans l'un des angles du corps 16, il s'agit d'un bossage 55, qui s'étend annulairement en continu, à la manière d'un bourrelet.

Pour l'oreille 34 prévue à l'extrémité du bras 20, il s'agit d'un bossage 55' qui ne s'étend que sur la partie en U du contour de cette oreille 34, à la manière, lui aussi, d'un bourrelet.

Parallèlement, dans la forme de réalisation représentée, la force de retenue due, pour la cassette 11, aux moyens d'assujettissement 44A équipant le couvercle 24 est une simple force de frottement.

Au montage, il peut si désiré être procédé comme suit.

Dans un premier temps, figure 7, la cassette 11, éventuellement équipée d'un quelconque composant annexe, tel que par exemple un voyant ou un détrompeur, ou un ensemble de deux cassettes 11, lorsque doit être formée une cassette double, est rapporté sur un plot d'assemblage, non représenté, prévu à cet effet.

Le couvercle 24 est alors mis en place sur cette ou ces cassettes 11, avec engagement de ses ergots 45 dans leurs perçages 50.

Le frottement dû aux moyens d'assujettissement 44A, 44B que constituent ces ergots 45 et ces perçages 50 est suffisant pour assurer le maintien de la ou des cassettes 11 sur le couvercle 24.

Ce couvercle 24 forme donc dès lors avec la ou les cassettes 11 un sous-ensemble unitaire, qui peut avantageusement être manipulé en tant que tel, sans péril pour sa cohésion.

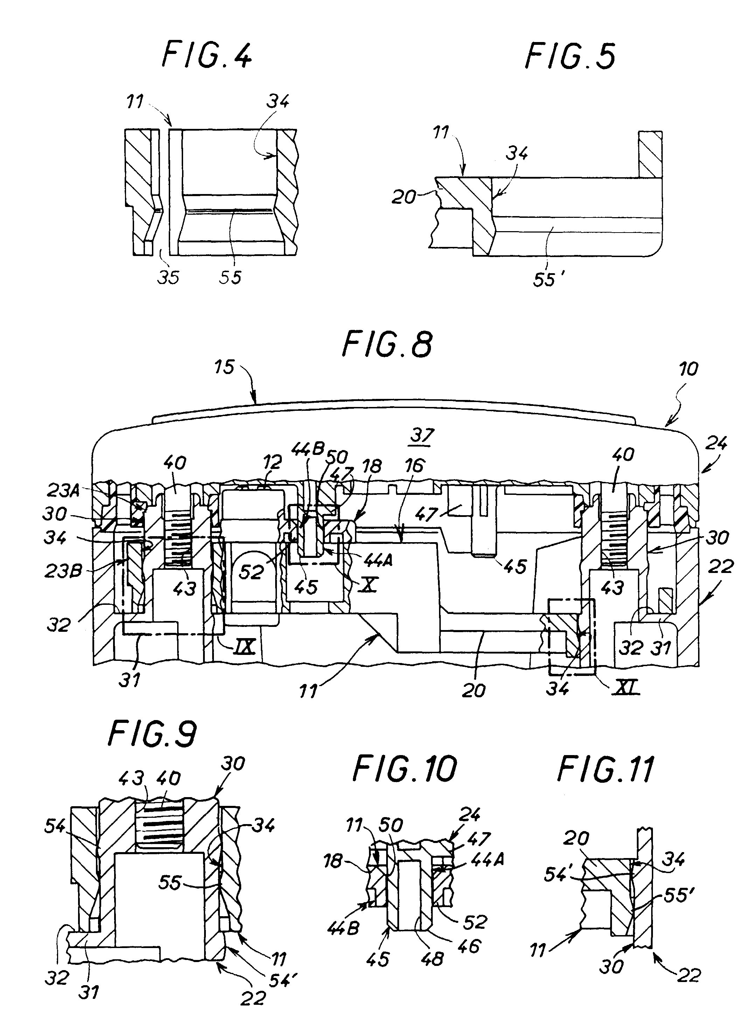

En particulier, ce sous-ensemble unitaire peut avantageusement être globalement rapporté sur le corps de boîtier 22, avec engagement des oreilles 34 de la ou des cassettes 11 sur les colonnettes 30 de celui-ci, tel que représenté à la figure 8.

Lors de cet engagement, les bossages 55, 55' des oreilles 34 de la ou des cassettes 11 franchissent élastiquement les bossages 54, 54' des colonnettes 30 du corps de boîtier 22, et, au terme de cet engagement, qui est matérialisé par la fermeture du corps de boîtier 22 par le couvercle 24, ils viennent s'établir au-delà de ces bossages 54, 54' par rapport à l'extrémité libre des colonnettes 30.

Le boîtier 10 ainsi équipé d'une ou deux cassettes 11 peut être livré tel quel, sans engagement des verrous 39 du couvercle 24 sous la tête 41 des vis 40 du corps de boîtier 22.

En effet, eu égard aux moyens d'assujettissement 23A, 23B et 44A, 44B intervenant entre elles et le corps de boîtier 22, d'une part, et entre elles et le couvercle 24, d'autre part, la ou les cassettes 11 assurent avantageusement par elles-mêmes toute la cohésion nécessaire entre ce couvercle 24 et ce corps de boîtier 22.

Pour avoir accès à la ou aux cassettes 11, il suffit, dès lors, à l'installateur, de retirer le couvercle 24, sans avoir à intervenir sur ses verrous 39.

Eu égard à la valeur relative précisée ci-dessus entre les forces de retenue en jeu, la ou les cassettes 11 restent alors en place sur le corps de boîtier 22, en abandonnant le couvercle 24.

En effet, et ainsi qu'il résulte de ce qui précède, la retenue de la ou les cassettes 11 sur le corps de boîtier 22 se trouve assurée par les bossages 55, 55' de leurs oreilles 34, ceux-ci venant buter sur le bossage 54 des colonnettes 30 du corps de boîtier 22.

Bien entendu, la présente invention ne se limite pas à la forme de réalisation décrite et représentée, mais englobe toute variante d'exécution dans le cadre des revendications.

Son domaine d'application n'est pas non plus limité aux seuls interrupteurs ou va-et-vient du type de celui plus particulièrement décrit et représenté mais s'étend au contraire aussi bien à n'importe quels autres appareils électriques, et par exemple, aux prises de courant, et, plus précisément, aux socles de prise de courant.

Lorsqu'un tel socle de prise de courant comporte en saillie une broche de terre, il peut avantageusement être tiré parti de cette broche de terre pour constituer au moins partiellement les moyens d'assujettissement destinés à coopérer avec des moyens d'assujettissement prévus de manière complémentaire sur le couvercle.

Dans ce cas, par exemple, le couvercle ne comporte en sus qu'un ergot pour coopération avec un perçage de la cassette ou plaquette correspondante, le perçage qu'il comporte lui-même pour le passage de la broche de terre de cette cassette ou plaquette complétant, par serrage sur cette broche de terre, les moyens d'assujettissement recherchés.

## Revendications

1. Ensemble formé par un boîtier et au moins une cassette (11) contenant au moins un composant électrique, ledit boîtier comportant, d'une part, un corps de boîtier (22), qui est adapté à recevoir la cassette (11), et qui, pour une fixation relative de celle-ci, comporte des moyens d'assujettissement (23A) propres à coopérer avec des premiers moyens d'assujettissement complémentaires (23B) prévus à cet effet sur cette cassette (11), et, d'autre part, un couvercle (24), qui est adapté à recouvrir le corps de boîtier (22), et auquel sont associés des moyens de fermeture (25) propres à le solidariser de manière débrayable à celui-ci, caractérisé en ce que le couvercle (24) comporte également, pour une fixation relative de la cassette (11), des moyens d'assujettissement (44A) propres à coopérer avec des seconds moyens d'assujettissement complémentaires (44B) prévus à cet effet sur cette cassette (11).

2. Ensemble suivant la revendication 1, caractérisé en ce que les moyens d'assujettissement (44A) équipant le couvercle (24) comportent au moins un ergot (45), qui, en saillie sur sa surface inférieure, s'étend sensiblement perpendiculairement au fond (26) du corps de boîtier (22), et les seconds moyens d'assujettissement (44B) correspondants de la cassette (11) comportent au moins un perçage (50) propre à son engagement sur un tel ergot (45).

3. Ensemble suivant la revendication 2, caractérisé en ce que, la cassette (11) comportant elle-même un corps (16) et un couvercle (18), ledit perçage (50) affecte son seul couvercle (18).

4. Ensemble suivant l'une quelconque des revendications 2, 3, caractérisé en ce que ledit ergot (45) s'étend en pleine surface, à distance de la périphérie du couvercle (24).

5. Ensemble suivant l'une quelconque des revendications 2 à 4, caractérisé en ce que ledit ergot (45) est au moins localement renforcé par une nervure (47) à sa base.

6. Ensemble suivant l'une quelconque des revendications 2 à 5, caractérisé en ce que les moyens d'assujettissement (44A) équipant le couvercle (24) comportent quatre ergots (45).

7. Ensemble suivant l'une quelconque des revendications 1 à 6, caractérisé en ce que les moyens d'assujettissement (23A) équipant le corps de boîtier (22) comportent au moins une colonnette (30), qui s'étend sensiblement perpendiculairement au fond (26) de ce corps de boîtier (22), et dont l'extrémité, au moins, est libre, et les premiers moyens d'assujettissement (23B) correspondants de la cassette (11) comportent au moins une oreille (34) propre à son engagement sur une telle colonnette (30).

8. Ensemble suivant la revendication 7, caractérisé en ce que ladite oreille (34) présente au moins localement en saillie sur sa surface intérieure un bossage (55, 55').

9. Ensemble suivant l'une quelconque des revendications 7, 8, caractérisé en ce que ladite colonnette (30) s'étend au voisinage d'une des parois latérales (27) du corps de boîtier (22).

10. Ensemble suivant l'une quelconque des revendications 7 à 9, caractérisé en ce que, pour la retenue de la cassette (11), ladite colonnette (30) comporte au moins localement en saillie un bossage (54, 54').

11. Ensemble suivant l'une quelconque des revendications 7 à 10, caractérisé en ce que les moyens d'assujettissement (23A) équipant le corps de boîtier (22) comportent, à distance l'une de l'autre, deux colonnettes (30).

12. Ensemble suivant l'une quelconque des revendications 7 à 11, caractérisé en ce que les moyens de fermeture (25) associés au couvercle (24) comportant au moins un verrou (39), qui, monté pivotant, est destiné à s'engager sous la tête (41) d'une vis (40) solidaire du corps de boîtier (22), ladite vis (40) est en prise à vissage avec une colonnette (30) équipant ce corps de boîtier (22).

13. Ensemble suivant l'une quelconque des revendications 1 à 12, caractérisé en ce que la force de retenue due, pour la cassette (11), aux moyens d'assujettissement (23A) équipant le corps de boîtier (22) est supérieure à celle due aux moyens d'assujettissement (44A) équipant le couvercle (24).

14. Ensemble suivant la revendication 1, caractérisé en ce que, s'agissant d'un socle de prise de courant comportant une broche de terre, cette broche de terre constitue au moins partiellement les seconds moyens d'assujettissement (44B) de la cassette (11) destinés à coopérer avec des moyens d'assujettissement (44A) prévus de manière complémentaire sur le couvercle (24).

## Patentansprüche

1. Anordnung, bestehend aus einem Gehäuse und mindestens einer mindestens ein elektrisches Bauelement enthaltenden Kassette (11), wobei das Gehäuse einerseits einen Gehäusekörper (22) aufweist, der dafür ausgelegt ist, die Kassette (11) aufzunehmen, und der für deren relative Befestigung Befestigungsmittel (23A) aufweist, die dafür ausgelegt sind, mit zu diesem Zweck auf der Kassette (11) vorgesehenen ersten ergänzenden Befestigungsmitteln (23B) zusammenzuwirken, und andererseits einen Deckel (24), der dafür ausgelegt ist, den Gehäusekörper (22) abzudecken, und dem Verschlußmittel (25) zugeordnet sind, die dafür ausgelegt sind, ihn mit diesem in auskuppelbarer Weise fest zu verbinden, dadurch gekennzeichnet, daß der Deckel (24) ebenfalls für eine relative Befestigung der Kassette (11) Befestigungsmittel (44A) aufweist, die dafür ausgelegt sind, mit zweiten ergänzenden Befestigungsmitteln (44B) zusammenzuwirken, die zu diesem Zweck auf der Kassette (11) vorgesehen sind.

2. Anordnung nach Anspruch 1, dadurch gekennzeichnet, daß die am Deckel (24) vorgesehenen Befestigungsmittel (44A) mindestens eine Nase (45) aufweisen, die auf dessen Unterseite vorsteht und sich im wesentlichen senkrecht zum Boden (26) des Gehäusekörpers (22) erstreckt, und die entsprechenden zweiten Befestigungsmittel (44B) der Kassette (11) mindestens eine Bohrung (50) aufweisen, in die die Nase (45) eingesteckt werden kann.

3. Anordnung nach Anspruch 2, dadurch gekennzeichnet, daß, wenn die Kassette (11) selbst einen Körper (16) und einen Deckel (18) umfaßt, diese Bohrung (50) nur in ihrem Deckel (18) vorgesehen ist.

4. Anordnung nach einem der Ansprüche 2, 3, dadurch gekennzeichnet, daß die Nase (45) sich ganz auf der Fläche in einem Abstand vom Umfang des Deckels (24) erstreckt.

5. Anordnung nach einem der Ansprüche 2 bis 4, dadurch gekennzeichnet, daß die Nase (45) mindestens örtlich an ihrer Basis durch eine Rippe (47) verstärkt ist.

6. Anordnung nach einem der Ansprüche 2 bis 5, dadurch gekennzeichnet, daß die am Deckel (24) vorgesehenen Befestigungsmittel (44A) vier Nasen (45) umfassen.

7. Anordnung nach einem der Ansprüche 1 bis 6, dadurch gekennzeichnet, daß die am Gehäusekörper (22) vorgesehenen Befestigungsmittel (23A) mindestens eine Säule (30) umfassen, die sich im wesentlichen senkrecht zum Boden (26) des Gehäusekörpers (22) erstreckt und deren Ende zumindest frei ist, und die entsprechenden ersten Befestigungsmittel (23B) der Kassette (11) mindestens eine Öse (34) umfassen, in die eine solche Säule (30) eingesteckt werden kann.

8. Anordnung nach Anspruch 7, dadurch gekennzeichnet, daß die Öse (34) mindestens örtlich auf ihrer Unterseite vorstehend eine Erhebung (55, 55') aufweist.

9. Anordnung nach einem der Ansprüche 7, 8, dadurch gekennzeichnet, daß die Säule (30) sich in Nähe einer der Seitenwände (27) des Gehäusekörpers (22) erstreckt.

10. Anordnung nach einem der Ansprüche 7 bis 9, dadurch gekennzeichnet, daß die Säule (30) zum Zurückhalten der Kassette (11) mindestens örtlich vorstehend eine Erhebung (54, 54') aufweist.

11. Anordnung nach einem der Ansprüche 7 bis 10, dadurch gekennzeichnet, daß die am Gehäusekörper (22) vorgesehenen Befestigungsmittel (23A) in einem Abstand voneinander zwei Säulen (30) umfassen.

12. Anordnung nach einem der Ansprüche 7 bis 11, dadurch gekennzeichnet, daß die dem Deckel (24) zugeordneten Verschlußmittel (25) mindestens einen verschwenkbar montierten Riegel (39) umfassen, der dazu bestimmt ist, unter den Kopf (41) einer mit dem Gehäusekörper (22) fest verbundenen Schraube (40) zu treten, die in eine an dem Gehäusekörper (22) vorgesehene Säule (30) eingeschraubt ist.

13. Anordnung nach einem der Ansprüche 1 bis 12, dadurch gekennzeichnet, daß die Rückhaltekraft, die für die Kassette (11) durch die am Gehäusekörper (22) vorgesehenen Befestigungsmittel (23A) erzeugt wird, größer als diejenige ist, die durch die am Deckel (24) vorgesehenen Befestigungsmittel (44A) erzeugt wird.

14. Anordnung nach Anspruch 1, dadurch gekennzeichnet, daß, wenn es sich um einen Spromanschlußsockel mit einem Erdungsstift handelt, dieser Erdungstift mindestens teilweise die zweiten Befestigungsmittel (44B) der Kassette (11) bildet, die dazu bestimmt sind, mit ergänzend auf dem Deckel (24) vorgesehenen Befestigungsmitteln (44A) zusammenzuwirken.

## Claims

1. Assembly formed by a case and at least one cassette (11) containing at least one electric component, said case comprising on the one hand a case body (22) which is capable of receiving the cassette (11) and which, for relative fixing thereof, comprises fixing means (23A) suitable for cooperating with complementary first fixing means (23B) provided for this purpose on said cassette (11), and, on the other hand, a cover (24) which is capable of covering the case body (22) and to which closing means (25) are connected which are suitable for joining it in a releasable manner to said case body, characterised in that the cover (24) also comprises, for relative fixing of the cassette (11), fixing means (44A) suitable for cooperating with complementary second fixing means (44B) provided for this purpose on said cassette (11).

2. Assembly according to claim 1, characterised in that the fixing means (44A) provided on the cover (24) comprise at least one pin (45) which projects from its lower surface, extending substantially perpendicularly to the base (26) of the case body (22), and the corresponding second fixing means (44B) of the cassette (11) comprise at least one cut-out (50) appropriate for its engagement with such a pin (45).

3. Assembly according to claim 2, characterised in that the cassette (11) itself comprises a body (16) and a cover (18), said cut-out (50) affecting its only cover (18).

4. Assembly according to any one of claims 2, 3 characterised in that the pin (45) extends as a solid surface at a distance from the periphery of the cover (24).

5. Assembly according to any one of claims 2 to 4, characterised in that said pin (45) is at least locally reinforced with a rib (47) at its base.

6. Assembly according to any one of claims 2 to 5, characterised in that the fixing means (44A) provided on the cover (24) comprise four pins (45).

7. Assembly according to any one of claims 1 to 6, characterised in that the fixing means (23A) provided on the case body (22) comprise at least one small column (30) which extends substantially perpendicularly to the base (26) of this case body (22) and at least the extremity of which is free, and the corresponding first fixing means (23B) of the cassette (11) comprise at least one lug (34) suitable for engagement with such a small column (30).

8. Assembly according to claim 7, characterised in that said lug (34) has a boss (55, 55') projecting at least locally on its interior surface.

9. Assembly according to any one of claims 7, 8, characterised in that said small column (30) extends adjacently to one of the lateral walls (27) of the case body (22).

10. Assembly according to any one of claims 7 to 9, characterised in that for retaining the cassette (11) said small column (30) comprises a boss (54, 54') projecting at least locally.

11. Assembly according to any one of claims 7 to 10, characterised in that the fixing means (23A) provided on the case body (22) comprise two small columns (30) at a distance apart from one another.

12. Assembly according to any one of claims 7 to 11, characterised in that the closing means (25) connected to the cover (24) comprise at least one screw (39) which, being pivotably mounted, is intended to engage with the head (41) of a screw (40) integral with the case body (22), said screw (40) being in screwed engagement with a small column (30) provided on said case body (22).

13. Assembly according to any one of claims 1 to 12, characterised in that the retention force needed for the cassette (11) to the fixing means (23A) provided on the case body (22) is greater than that needed for the fixing means (44A) provided for the cover (24).

14. Assembly according to claim 1, characterised in that by acting upon an electrical outlet socket comprising an earth pin, said earth pin constitutes, at least in part, the second fixing means (44B) for the cassette (11), intended to cooperate with fixing means (44A) provided in a complementary manner on the cover (24).
